# EUROPEAN PATENT SPECIFICATION

(11) **EP 1 683 455 B1**
(45) Date of publication and mention of the grant of the patent: **19.11.2008**
(21) Application number: 06250383.4
(22) Date of filing: 24.01.2006
(51) Int. Cl.: A47J 43/28

(54) **Food handling implement**
Gerät zur Handhabung von Nahrungsmitteln
Ustensile pour la manipulation des aliments

(30) Priority: 24.01.2005 CA 2489633; 28.07.2005 US 191213
(43) Date of publication of application: 26.07.2006
(73) Proprietor: Simard, Jo-Anne, Laval, Québec H7H 1V8 (CA)
(72) Inventor: Simard, Jo-Anne, Laval, Québec H7H 1V8 (CA)
(74) Representative: Bennett, Adrian Robert J.

(56) References cited:
- EP-A- 0 856 274
- FR-A- 2 805 725
- US-A- 416 736

## Description

### FIELD OF THE INVENTION

The present invention generally relates to devices and implements used in the preparation of food. More specifically, the present invention is concerned with a food handling implement.

### BACKGROUND OF THE INVENTION

Properly holding, hanging or supporting a kitchen utensil such as a spoon or ladle during use in cooking or serving is a concern that has deserved a fair level of attention over the past years. Indeed, the kitchen utensil, such as a spoon used for stirring food in a pan, for example, is repeatedly put in contact with food ingredients and accumulates residues from the food on the efficient portion thereof. It is generally not desirable to leave the utensil leaned inside the container between uses, as it can interfere with food preparation or slide too deeply into in the food and have its handle portion soiled. Therefore, soiled kitchen utensils typically need to be repeatedly put aside out of the container for certain periods of time, and are thus a potential cause of dirtying of the peripheral area such as cook-stove, counter, appliances, table, floor, pieces of furniture, clothes, etc. by direct contact or by dripping. The utensil being put aside may also be subject to damages such as burning or melting that can be caused by a heat source or a hot surface.

Miscellaneous types of stands, holders or rests to be placed on a stove, a counter or a table and on which a utensil can be momentarily deposited nearby a container are well known for years. Although these products are designed to prevent direct contact with other surrounding surfaces, dripping along the paths separating the device form the container(s) may still occur. Besides this limitation, the device itself has nevertheless to be washed thoroughly after use, and one may have to rely on as many devices as the number of utensils used during preparation or serving. One must also consider the cost of buying the devices, as well as the necessity of storing them around the kitchen and retrieving them when needed. Moreover, depositing an efficient portion of a kitchen utensil to be reused into the food onto such a device may create contamination of the food by transportation of contaminants present on the device.

Another type of devices, comprising clips or holders and/or clamps to be temporarily attached to a rim of a container to hold a cooking utensil, have also been proposed to address the problem. Their basically valuable concept aims at maintaining the efficient portion of the utensil above the container, to prevent the utensil from falling or sliding into the food and dripping out of the container. Examples of such devices are taught in US patents 1,483,833 issued in 1923 to Potter, 3,931,668 granted to Hombach in 1976, 5,518,211 granted to Gaskill et al. in May 1996, and 5,730,405 issued to Nichols on March 24 1998. These holding devices fail to propose a really universal structure, which can be conveniently used to retain different types of utensil in a user friendly manner. Again, these devices must further be bought separately from the utensil or cookware, must be stored in the kitchen and retrieved when needed, and washed after use, which may rapidly discourage usage. Using such a device is also inappropriate when more than one utensil are being used simultaneously.

It is also a common practice to provide kitchen utensils such as, spoons, ladles, spatulas and forks with a hook at the proximal end of the handle thereof to enable suspension of the utensil to a supporting device such as flat bar or loop provided nearby the cooking area. Openings or hooks provided at the proximal or median portion of especially long handles, most often fabricated through punching and/or stamping of the handle material, have also been contemplated in the prior art. Peg bars or straight edges can be used to suspend such utensils. However, dripping along the paths traveled between the containers and the supporting device are still likely to occur and require cleaning. Also, even though hooks may be provided, their position on the handle is such that suspension from a rim of a typical container can not be envisaged since it would not allow the efficient distal portion of the utensil to clear the container supporting surface, most often being a heating surface, since the overall length of the utensil is usually much greater than the height of the container. This is especially true when using a low profile pan.

However, a few prior patents disclose holding devices formed integrally into an implement, at a position proximal to the efficient portion thereof, to enable the implement to be attached to a rim of a container. In US patent 5,201,121 issued to Heiberg in April 1993, a kitchen implement is provided with a mounting opening through the implement sheet material forming a pair of arcuate edges and an outer projecting lip for engagement with outer and inner surfaces of a bowl to mount the implement thereto. Similarly, Desjardin in US patent 5,065,977 granted on November 19 1991, teaches a tool wherein an opening is provided through a flat heel portion of a flat blade, defining a resiliently flexible tongue and a pair of shoulders cooperating with the tongue to engage a groove in an annular rim of a container and thereby clipping the tool onto the rim with the blade extending vertically into the container.

Although such integral implement mounting devices successfully enable an implement to be held on a rim of a container with its efficient portion extending into the container, their structures are not suitable for application to kitchen utensils requiring a solid fluid tight and often elongated efficient portion. Furthermore, they could not comply with utensils often provided with an elongated handle portion causing the centre of gravity of the utensil to be located above the mounting device, which would render the mounting unstable and cause flipping of the utensil out of the container.

Although the above examples show that some solutions have been contemplated in the prior art to address the problem of temporarily holding utensils during use in cooperation with a container, these devices are nevertheless presenting major limitations and drawbacks and are lacking important features necessary for them to provide a convenient, efficient and cost effective solution to that concern.
A combined fork, pan and stove lid liffer is disclosed in US 416,736 comprising a handle portion which terminates at one end in fork tines and at the opposite end in a lifting hook. Adjacent the tines there is provided a pair of curved arms which are located so that they can be hooked over the rim of a vessel with the fork tines resting against an exterior surface of the cooking vessel. This disclosure provides a food handling implement of limited application and the implement could also result in unnecessary soiling of the vessel.

There is therefore a need in the industry to provide an improved food handling implement.

### QBJECTS OF THE INVENTION

An object of the present invention is therefore to provide a food handling implement.

### SUMMARY OF THE INVENTION

The present invention provides a food handling implement, securable to a wall of a kitchen vessel, said food handling implement comprising:
- a food handling section, said food handling section defining
- a food handling section first surface; and
- a substantially opposed food handling section second surface, said food handling section second surface being provided for handling food; and
- a tongue extending from said food handling section,
- a substantially elongated handle coupled to said food handling section, said handle defining a handle longitudinal axis;
- wherein said tongue is configured, sized and positioned such that said food handling implement is securable to the wall of the kitchen vessel in a mounted configuration by at least partially inserting the wall of the kitchen vessel in an anchoring space defined between the food handling section and the tongue;
characterised in that
- at least part of said tongue is arranged in a substantially spaced apart relationship relative to said food handling section first surface for defining the anchoring space therebetween and when said food handling implement is in said mounted configuration, said food handling section is positioned at least partially inside said kitchen vessel and said food handling section second surface faces substantially inwardly relative to said kitchen vessel. Prefered embodiment of the invention are disclosed in dependent claims 2-13

Other objects, advantages and features of the present invention will become more apparent upon reading of the following non-restrictive description of preferred embodiments thereof, given by way of example only with reference to the accompanying drawings.

### BRIEF DESCRIPTION OF THE DRAWINGS

In the appended drawings:

Figure 1 is an isometric view an integral utensil and clip device according to the present invention, attached to a peripheral wall of a cookware article;

Figure 2 is a frontal view of an integral utensil and clip device according to the present invention;

Figure 3 is a lateral view of the integral utensil and clip device of Figure 2;

Figure 4 is a view from the back of the integral utensil and clip device of Figure 2;

Figure 5 is an alternate embodiment of the integral utensil and clip device provided with a non converging tab;

Figure 6 shows the integral utensil and clip device of Figure 2 just prior to attachment to a wall of a cookware article;

Figure 7 shows the integral utensil and clip device of Figure 2 attached to a wall of a cookware article;

Figure 8a is a detailed lateral cross sectional view of a clipping portion of an integral utensil and clip device according to an embodiment of the present invention;

Figure 8b is top cross sectional view according to line BB of Figure 8a;

Figure 9 is a detailed top cross sectional view of a clipping portion according to an alternate embodiment of the present invention;

Figure 10 is a lateral cross sectional view of a spatula according to the present invention.

Identical numerals in the drawings represent similar parts throughout the description.

### DETAILED DESCRIPTION

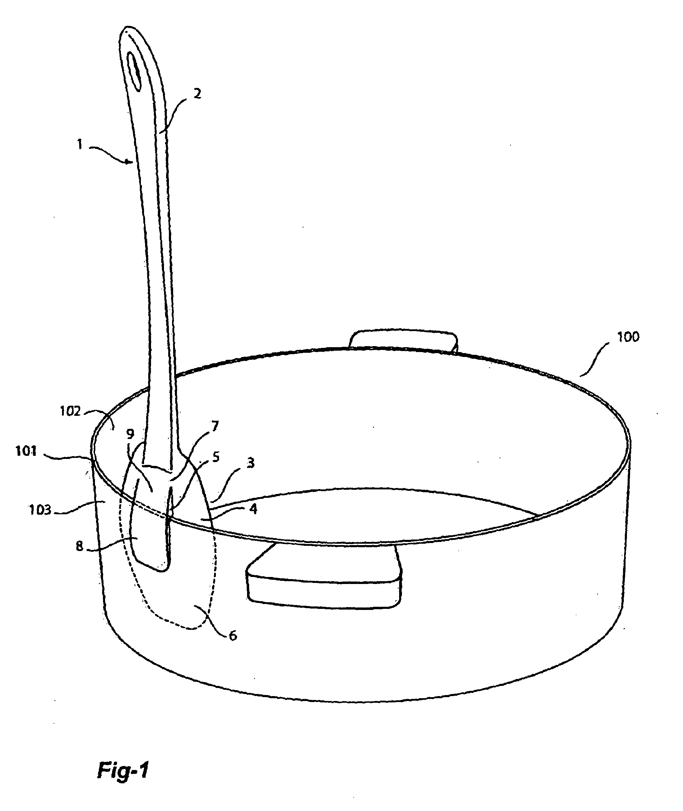

Generally stated, the present invention relates to an integral utensil and clip device 1 for attachment to a generally vertical wall 101, as illustrated in Figure 1. Although the invention will be described referring to a spoon 1 destined to be attached to a rim or peripheral wall 101 of a cookware article such as pan 100, it is contemplated that different utensil can be provided with a similar clipping structure, with equal benefits and without departing from the spirit of the invention. For example, different types of ladles, forks and spatulas can be contemplated as well. Also, clipping of the utensil onto a wide range of articles comprising generally vertically extending thin walls can be contemplated.

In more general terms, a food handling implement, such as the device 1, is securable to a wall of a kitchen vessel, such as the peripheral wall 101. The wall of the kitchen vessel is not necessarily vertical.

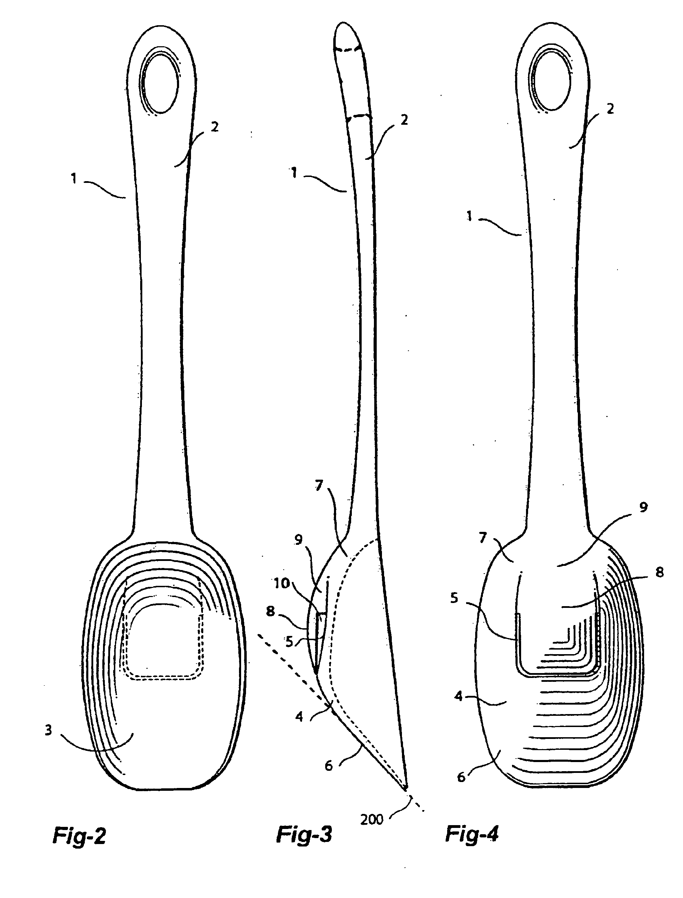

The utensil 1 comprises a proximal handle portion 2 and a distal efficient portion 3 represented by a fluid tight receptacle (see Figures 2 and 3) connected to handle 1. The efficient portion, also called a food handling section, comprises a back portion 4 comprising an inner face engaging surface 5 for engaging an inner surface 102 of wall 101 of pan 100. The back portion further defines a fore portion 6 and a heel portion 7 and comprises a tongue in the form of a tab 8 extending generally parallel to inner face engaging surface 5, and being attached to the heel portion 7, through root portion 9. At least part of the tab 8 is in a substantially spaced apart relationship relative to the efficient portion and defines an anchoring space therebetween. It should be noted that in other embodiments involving different shapes of efficient portions, tab 8 can be connected to a median portion of the back portion, between the fore portion and the heel portion, as long as proximity to the distal end of the utensil can be increased without compromising proper operation of the utensil In addition, in some embodiments of the invention, the tab 8 is not entirely in register with the back portion 4.

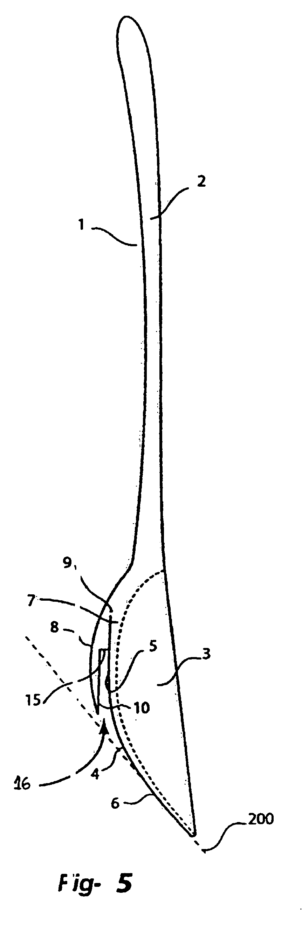

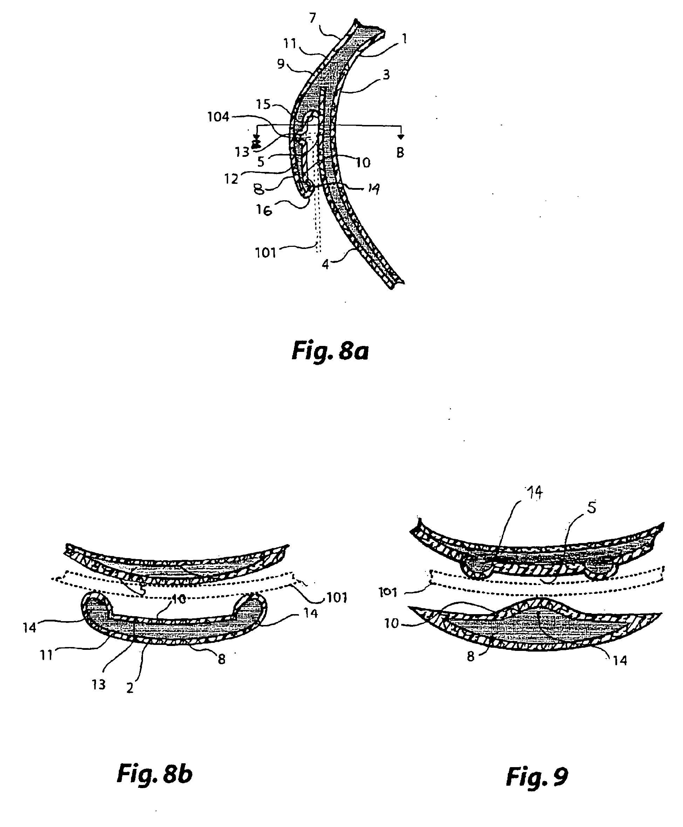

As better represented in Figures 3, 5 and 8a, the tab 8 comprises an outer face engaging surface 10 cooperating with inner face engaging surface 5 of the back portion 4 for clipping the utensil on the upper portion (rim) of wall 101 of cookware article 100. In the embodiment of Figure 3, engaging surfaces are slightly converging and tab 8 is resilient to improve clipping about wall 101 by applying a clamping force at a certain distance below the top of the wall, thus increasing compensation to the moment or rotation applied by the upper (handle) portion 2 of the utensil 1. To ease insertion of the clip over the top edge of wall 101, by simple downward sliding, the free end of tab 8 and engaging surface 5 preferably cooperate to define a tapering inlet 16 (see Figures 5 and 8a). The clip device further comprises a stop member 15, integral with root 9, to limit the depth of insertion of the utensil onto the wall 101. For example, the stop member 15 extends towards the food handling section and is substantially perpendicular to the longitudinal axis of the tab 8. Furthermore, surfaces 5 and 10, and possibly the entire efficient portion, can be coated with a resilient material 11, such as a heat resistant silicone, while tab 8 may have a relatively stiffer internal core 12 as illustrated in Figures 8a and 8b. Alternatively, a substantial portion of the efficient portion including tab 8 can be molded with a resilient material onto a more rigid central core and handle portion.

In the embodiment illustrated in Figure 8a and 8b, it is also shown that a recess, for example the transversal groove 13, can be provided near the root 9 of tab 8 to provide a cavity for nesting an outwardly extending lip 104 provided on the rim of certain types of cookware articles. Good contact of wall engaging surfaces 5 and 10 with faces 102 and 103 of wall 101 is thereby preserved. The lower edge of groove 13 is preferably chamfered to prevent lip 104 from locking into groove 13 and enable easy retrieving of the utensil 1 from engagement with the rim of container 100. In this embodiment, the top edge of the groove may provide the function of insertion limitation stop.

The embodiment of Figure 8a and 8b further shows that protrusions may be provided on surfaces 5 and 10 to better control the locations of contact between the engaging surfaces and wall faces. Since wall 101 is likely to be circular with an unknown diameter, full contact between engaging surfaces 5, 10 and the wall could not be performed. Therefore, in Figure 8b, it is shown that tab 8 has been shaped to present a pair of lateral protrusions 14, to force contact with the outer face 101 to be performed about two points or two vertical linear continuous or discontinuous ridges. Reciprocally, the same structure can be implemented into engaging surface 5 as illustrated in Figure 9. When a two-point contact is provided on one of engaging surfaces 5 and 10, the opposing surface (see surface 5 in Figure 8b) can rely on a single point or single vertical line contact area as for surface 5 in Figure 8b, which is provided with a curvilinear profile. In the embodiment of Figure 9, a protrusion has been formed in surface 10 to ensure that contact with the outer face of the wall will occur at the center of the tab, either along a vertical line or at a pin-point location. While three points of contact would provide adequate retention of the utensil 1, a combination providing a pair of laterally spaced-apart contacts on each engaging surface is preferred.

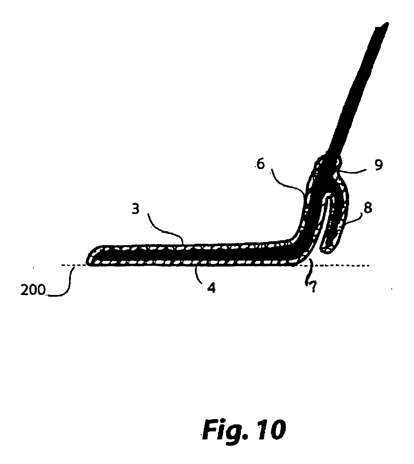

Turning back to Figure 3, a phantom line 200 has been drawn to represent a virtual plane, also called a fore plane, following the general orientation of the fore portion 6 of the efficient portion 3 of utensil 1. This is to show that positioning the clipping tab 8 properly at the heel portion 7 of the efficient portion 3 does not compromise normal use of the utensil. In Figure 10, utensil 1 has been represented by a spatula to emphasize that fact. However, for certain types of utensils, the tab 8 may extend from a median portion of the back portion of the efficient portion, without compromising normal use of the utensil, thereby shortening the portion of the efficient portion to be extending within the container. This is possible namely because the structure of the clipping device of the present invention does not require an opening to be provided through the efficient portion of the utensil.

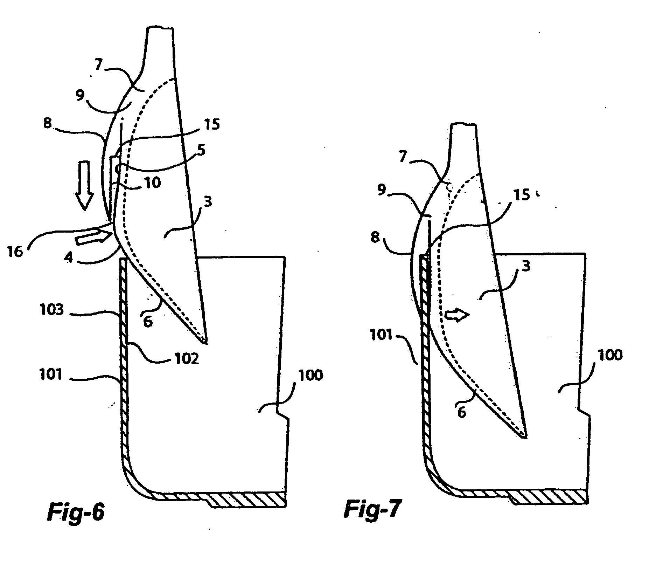

As illustrated in Figures 6 and 7, in operation, the back portion 4 of the efficient portion 3 of the integral utensil and clip device 1 has merely to be leaned against the inner face of wall 101, with the free end of tab 8 adjacent the wall; and then pushed downwardly to engage the top of the wall into the inlet 16 of the clip provided by the cooperation of the tab 8 with the engaging surface 5 of the back portion 4 of efficient portion 3. The utensil 1 can thus be properly attached to the rim of the wall of cookware article 100, with its handle portion 2 extending generally vertically and with at least the fore portion 6 of its efficient portion 3 extending into container 100 to ensure that any dripping of food residues will return to the food in the container. The proximity of the clipping device from the distal end of the utensil 1 enables the clipping thereof to a variety of containers including low profile pans. Moreover, this is performed without requiring any holding device separate from the integral utensil and clip device 1. It is also worth mentioning that the integral clip provided in the utensil 1 may also be used to store the utensil between uses, by attaching it to any supportive structure comprising a generally vertically extending thin wall, as an alternative to hanging or storage into a drawer.

One can thus easily appreciate that the above described -embodiments according to the present invention provide effective solutions for holding a cooking or serving utensil during use with pots, pans or like containers, while maintaining the peripheral area clean. Therefore, it can be seen that the integral utensil and clip device can be advantageously used in miscellaneous applications, by accordingly changing the functionality of the efficient portion thereof.

## Claims

1. A food handling implement (1), securable to a wall (101) of a kitchen vessel (100), said food handling implement (1) comprising:
- a food handling section (3), said food handling section (3) defining
- a food handling section first surface (4); and
- a substantially opposed food handling section second surface (6), said food handling section second surface (6) being provided for handling food; and
a tongue (8) extending from said food handling section (3),
- a substantially elongated handle (2) coupled to said food handling section (3), said handle (2) defining a handle longitudinal axis;
- wherein said tongue (8) is configured, sized and positioned such that said food handling implement (1) is securable to the wall (101) of the kitchen vessel (100) in a mounted configuration by at least partially inserting the wall (101) of the kitchen vessel (100) in an anchoring space defined between the food handling section (3) and the tongue(8);
**characterised in that**
at least part of said tongue (8) is arranged in a substantially spaced apart relationship relative to said food handling section first surface (4) for defining the anchoring space therebetween and when said food handling implement is in said mounted configuration, said food handling section (3) is positioned at least partially inside said kitchen vessel (100) and said food handling section second surface (6) faces substantially inwardly relative to said kitchen vessel.

2. A food handling implement (1) according to claim 1, wherein
- said tongue (8) defines substantially opposed tongue first and second ends and opposed tongue first and second surfaces, said tongue first and second ends defining a tongue longitudinal axis extending therebetween; and
- said tongue (8) extends from said food handling section first surface (4) substantially adjacent said tongue first end, said tongue extending from the food handling section first surface (4) at a tongue attachment location (9), said tongue first surface (10) facing at least in part said food handling section first surface (4).

3. A food handling implement according to claim 2, wherein said tongue longitudinal axis is substantially parallel to said handle longitudinal axis.

4. A food handling implement according to claim 2 or 3, wherein said anchoring space is substantially tapered from said tongue first end towards said tongue second end.

5. A food handling implement according to claim 2 or 3, wherein said tongue first surface is substantially parallel to said food handling section first surface (4).

6. A food handling implement according to any one of claims 2 to 5, wherein said tongue (8) is resiliently mounted to said food handling section first surface (4) for allowing said wall (101) to push at least part of said tongue (8) away from said food handling section first surface (4) upon the at least partial insertion of the wall (101) of the kitchen vessel (100) in said anchoring space.

7. A food handling implement according to any one of claims 2 to 6, wherein at least one of said tongue (8) and said food handling section first surface (4) is covered at least partially by a substantially resilient material.

8. A food handling implement according to claim 7, wherein said tongue (8) includes a stop member (15) extending between said tongue attachment location (9) and said tongue first surface (10), said stop member (15) being substantially perpendicular to said tongue longitudinal axis.

9. A food handling implement according to any one of claims 2 to 8, wherein the tongue (8) includes a tongue recess (13) extending thereinto from said anchoring space, for receiving a lip of a cooking vessel (100).

10. A food handling implement according to any one of claims 2 to 9, wherein said food handling section first surface (4) includes a fore portion (6) and a heel portion (7), said fore portion (6) defining a fore plane substantially parallel to said fore portion (7), said tongue (8) extending from said heel portion (7) towards said fore plane over a distance smaller than a distance between said fore plane and said tongue attachment location (9).

11. A food handling implement according to any one of claims 2 to 10, wherein a food handling section recess is formed into said food handling section first surface (4) for receiving at least partially thereinto said tongue second end.

12. A food handling implement according to any one of claims 2 to 11, further comprising a protrusion (14) extending into said anchoring space from at least one of said tongue (8) and said food handling section first surface (4).

13. A food handling implement according to any one of claims 2 to 12, further comprising at least two protrusions (14) extending into said anchoring space from at least one of said tongue (8) and said food handling section first surface (4), said at least two protrusions (14) being substantially equidistant from said tongue attachment location (9).

## Patentansprüche

1. Lebensmittel-Handhabungsgerät (1), das an einer Wand (101) eines Küchenbehälters (100) befestigt werden kann, wobei das Lebensmittel-Handhabungsgerät (1) enthält:
einen Lebensmittel-Handhabungsabschnitt (3), wobei der Lebensmittel-Handhabungsabschnitt (3) definiert:
- eine erste Lebensmittel-Handhabungsabschnittsoberfläche (4); und
- eine zweite im wesentlichen gegenüberliegende Lebensmittel-Handhabungsabschnittsoberfläche (6), wobei die zweite Lebensmittel-Handhabungsabschnittsoberfläche (6) zur Handhabung von Lebensmitteln vorgesehen ist; und
- eine Zunge (8), die sich vom Lebensmittel-Handhabungsabschnitt (3) erstreckt,
- einen im wesentlichen länglichen Griff (2), der an den Lebensmittel-Handhabungsabschnitt (3) gekoppelt ist, wobei der Griff (2) eine Grifflängsachse definiert;
- wobei die Zunge (8) derart konfiguriert, bemessen und angeordnet ist, dass das Lebensmittel-Handhabungsgerät (1) an einer Wand (101) des Küchenbehälters (100) in einer angebrachten Konfiguration gesichert werden kann, indem die Wand (101) des Küchenbehälters (100) wenigstens teilweise in einen Verankerungszwischenraum zwischen dem Lebensmittel-Handhabungsabschnitt (3) und der Zunge (8) eingefügt wird;
**dadurch gekennzeichnet, dass**
wenigstens ein Teil der Zunge (8) in einer im wesentlichen beabstandeten Beziehung relativ zur ersten Lebensmittel-Handhabungsabschnittsoberfläche (4) angeordnet ist, um dazwischen einen Verankerungszwischenraum zu definieren, und, wenn sich das Lebensmittel-Handhabungsgerät in der angebrachten Konfiguration befindet, der Lebensmittel-Handhabungsabschnitt (3) wenigstens teilweise innerhalb des Küchenbehälters (100) positioniert ist und die zweite Lebensmittel-Handhabungsabschnittsoberfläche (6) im Bezug auf den Küchenbehälter im wesentlichen nach innen gewandt ist.

2. Lebensmittel-Handhabungsgerät (1) nach Anspruch 1, bei dem
- die Zunge (8) im wesentlichen gegenüberliegende erste und zweite Zungenenden sowie gegenüberliegende erste und zweite Zungenflächen definiert, wobei die ersten und zweiten Zungenenden eine Zungenlängsachse definieren, die sich zwischen ihnen erstreckt; und
- sich die Zunge (8) von der ersten Lebensmittel-Handhabungsabschnittsoberfläche (4) im wesentlichen benachbart zum ersten Zungenende erstreckt, wobei sich die Zunge von der ersten Lebensmittel-Handhabungsabschnittsoberfläche (4) an einer Zungenanbringungsstelle (9) erstreckt, wobei die erste Zungenfläche (10) wenigstens teilweise der ersten Lebensmittel-Handhabungsabschnittsoberfläche (4) zugewandt ist.

3. Lebensmittel-Handhabungsgerät nach Anspruch 2, bei dem die Zungen längsachse im wesentlichen parallel zur Grifflängsachse verläuft.

4. Lebensmittel-Handhabungsgerät nach Anspruch 2 oder 3, bei dem sich der Verankerungszwischenraum vom ersten Zungenende zum zweiten Zungenende im wesentlichen verjüngt.

5. Lebensmittel-Handhabungsgerät nach Anspruch 2 oder 3, bei dem die erste Zungenfläche im wesentlichen parallel zur ersten Lebensmittel-Handhabungsabschnittsoberfläche (4) ist.

6. Lebensmittel-Handhabungsgerät nach einem der Ansprüche 2 bis 5, bei dem die Zunge (8) elastisch an der ersten Lebensmittel-Handhabungsabschnittsoberfläche (4) angebracht ist, um es der Wand (101) zu gestatten, wenigstens einen Teil der Zunge (8) weg von der ersten Lebensmittel-Handhabungsabschnittsoberfläche (4) zu drücken, wenn die Wand (101) des Küchenbehälters (100) wenigstens teilweise in den Verankerungszwischenraum eingefügt ist.

7. Lebensmittel-Handhabungsgerät nach einem der Ansprüche 2 bis 6, bei dem die Zunge (8) und/oder die erste Lebensmittel-Handhabungsabschnittsoberfläche (4) wenigstens teilweise mit einem im wesentlichen elastischen Material beschichtet sind.

8. Lebensmittel-Handhabungsgerät nach Anspruch 7, bei dem die Zunge (8) ein Anschlagelement (15) enthält, das sich zwischen der Zungenanbringungsstelle (9) und der ersten Zungenfläche (10) erstreckt, wobei das Anschlagelement (15) im wesentlichen senkrecht zur Zungenlängsachse verläuft.

9. Lebensmittel-Handhabungsgerät nach einem der Ansprüche 2 bis 8, bei dem die Zunge (8) eine Zungenaussparung (13) enthält, die sich in diese vom Verankerungszwischenraum erstreckt, um einen Rand eines Kochbehälters (100) aufzunehmen.

10. Lebensmittel-Handhabungsgerät nach einem der Ansprüche 2 bis 9, bei dem die erste Lebensmittel-Handhabungsabschnittsoberfläche (4) einen Spitzenabschnitt (6) und einen Endabschnitt (7) enthält, wobei der Spitzenabschnitt (6) eine Spitzenebene definiert, die im wesentlichen parallel zum Spitzenabschnitt (6) ist, wobei sich die Zunge vom Endabschnitt (7) zur Spitzenebene über eine Distanz erstreckt, die kleiner ist als eine Distanz zwischen der Spitzenebene und der Zungenanbringungsstelle (9).

11. Lebensmittel-Handhabungsgerät nach einem der Ansprüche 2 bis 10, bei dem eine Lebensmittel-Handhabungsabschnittsaussparung in der ersten Lebensmittel-Handhabungsabschnittsoberfläche (4) ausgebildet ist, um darin wenigstens teilweise das zweite Zungenende aufzunehmen.

12. Lebensmittel-Handhabungsgerät nach einem der Ansprüche 2 bis 11, weiterhin enthaltend einen Vorsprung (14), der sich in den Verankerungszwischenraum von der Zunge (8) und/oder der ersten Lebensmittel-Handhabungsabschnittsoberfläche (4) erstreckt.

13. Lebensmittel-Handhabungsgerät nach einem der Ansprüche 2 bis 12, weiterhin enthaltend wenigstens zwei Vorsprünge (14), die sich in den Verankerungszwischenraum von der Zunge (8) und/oder der ersten Lebensmittel-Handhabungsabschnittsoberfläche (4) erstrecken, wobei die wenigstens zwei Vorsprünge (14) von der Zungenanbringungsstelle (9) im wesentlichen gleich weit entfernt sind.

## Revendications

1. Instrument de manipulation d'aliments (1), pouvant être fixé sur une paroi (101) d'un récipient de cuisine (100), ledit instrument de manipulation d'aliments (1) comportant :
un tronçon de manipulation d'aliments (3), ledit tronçon de manipulation d'aliments (3) définissant :
- une première surface (4) de tronçon de manipulation d'aliments, et
- une seconde surface (6) de tronçon de manipulation d'aliments sensiblement opposée, ladite seconde surface (6) de tronçon de manipulation d'aliments étant prévue pour la manipulation d'aliments, et
- une languette (8) s'étendant depuis ledit tronçon de manipulation d'aliments (3),
- un manche sensiblement allongé (2) couplé audit tronçon de manipulation d'aliments (3), ledit manche (2) définissant un axe longitudinal de manche,
- dans lequel ladite languette (8) est configurée, dimensionnée et positionnée de manière à ce que ledit instrument de manipulation d'aliments (1) puisse être fixé à la paroi (101) du récipient de cuisine (100), dans une configuration montée en insérant au moins partiellement la paroi (101) du récipient de cuisine (100) dans un espace d'ancrage défini entre le tronçon de manipulation d'aliments (3) et la languette (8),
**caractérisé en ce que**
au moins une partie de ladite languette (8) est disposée dans une relation sensiblement espacée par rapport à ladite première surface (4) de tronçon de manipulation d'aliments, pour définir l'espace d'ancrage entre celles-ci, et lorsque ledit instrument de manipulation d'aliments est dans ladite configuration montée, ledit tronçon de manipulation d'aliments (3) est positionné au moins partiellement dans ledit récipient de cuisine (100), et ladite seconde surface (6) de tronçon de manipulation d'aliments est dirigée sensiblement vers l'intérieur par rapport audite récipient de cuisine.

2. Instrument de manipulation d'aliments (1) selon la revendication 1, dans lequel
- ladite languette (8) définit des première et seconde extrémités de languette sensiblement opposées, et des première et seconde surfaces de languette opposées, lesdites première et seconde extrémités de languette définissant un axe longitudinal de languette s'étendant entre celles-ci, et
- ladite languette (8) s'étend depuis ladite première surface (4) de tronçon de manipulation d'aliments sensiblement adjacente à ladite première extrémité de languette, ladite languette s'étendant depuis la première surface (4) de tronçon de manipulation d'aliments au niveau d'un emplacement de fixation de languette (9), ladite première surface de languette (10) faisant face au moins partiellement à ladite première surface (4) de tronçon de manipulation d'aliments.

3. Instrument de manipulation d'aliments selon la revendication 2, dans lequel ledit axe longitudinal de languette est sensiblement parallèle audit axe longitudinal de manche.

4. Instrument de manipulation d'aliments selon la revendication 2 ou 3, dans lequel ledit espace d'ancrage est sensiblement conique depuis ladite première extrémité de languette vers ladite seconde extrémité de languette.

5. Instrument de manipulation d'aliments selon la revendication 2 ou 3, dans lequel ladite première surface de languette est sensiblement parallèle à ladite première surface (4) de tronçon de manipulation d'aliments.

6. Instrument de manipulation d'aliments selon l'une quelconque des revendications 2 à 5, dans lequel ladite languette (8) est montée de façon élastique sur ladite première surface (4) de tronçon de manipulation d'aliments, pour permettre à ladite paroi (101) de pousser au moins une partie de ladite languette (8) loin de ladite première surface (4) de tronçon de manipulation d'aliments, lors de l'insertion au moins partielle de la paroi (101) du récipient de cuisine (100) dans ledit espace d'ancrage.

7. Instrument de manipulation d'aliments selon l'une quelconque des revendications 2 à 6, dans lequel au moins une parmi ladite languette (8) et ladite première surface (4) de tronçon de manipulation d'aliments est recouverte au moins partiellement par une matière sensiblement souple.

8. Instrument de manipulation d'aliments selon la revendication 7, dans lequel ladite languette (8) comporte un élément de butée (15), s'étendant entre ledit emplacement de fixation de languette (9) et ladite première surface de languette (10), ledit élément de butée (15) étant sensiblement perpendiculaire audit axe longitudinal de languette.

9. Instrument de manipulation d'aliments selon l'une quelconque des revendications 2 à 8, dans lequel la languette (8) comporte un évidement de languette (13) s'étendant dans celle-ci depuis ledit espace d'ancrage, pour recevoir une lèvre d'un récipient de cuisson (100).

10. Instrument de manipulation d'aliments selon l'une quelconque des revendications 2 à 9, dans lequel ladite première surface (4) de tronçon de manipulation d'aliments comporte une partie avant (6) et une partie arrière (7), ladite partie avant (6) définissant un plan avant sensiblement parallèle à ladite partie avant (7), ladite languette (8) s'étendant depuis ladite partie arrière (7) vers ledit plan avant sur une distance inférieure à une distance entre ledit plan avant et ledit emplacement de fixation de languette (9).

11. Instrument de manipulation d'aliments selon l'une quelconque des revendications 2 à 10, dans lequel un évidement de tronçon de manipulation d'aliments est formé dans ladite première surface (4) de tronçon de manipulation d'aliments, pour recevoir la seconde extrémité de languette au moins partiellement dans celui-ci.

12. Instrument de manipulation d'aliments selon l'une quelconque des revendications 2 à 11, comportant en outre une saillie (14) s'étendant dans ledit espace d'ancrage depuis au moins une parmi ladite languette (8) et ladite première surface (4) de tronçon de manipulation d'aliments.

13. Instrument de manipulation d'aliments selon l'une quelconque des revendications 2 à 12, comportant en outre au moins deux saillies (14) s'étendant dans ledit espace d'ancrage depuis au moins une parmi ladite languette (8) et ladite première surface (4) de tronçon de manipulation d'aliments, lesdites au moins deux saillies (14) étant sensiblement équidistantes dudit emplacement de fixation de languette (9).
